(19) Europäisches Patentamt
European Patent Office
Office européen des brevets

(11) **EP 2 235 717 B1**

(12) **EUROPÄISCHE PATENTSCHRIFT**

(45) Veröffentlichungstag und Bekanntmachung des Hinweises auf die Patenterteilung:
**24.04.2019 Patentblatt 2019/17**

(21) Anmeldenummer: **09703919.2**

(22) Anmeldetag: **21.01.2009**

(51) Int Cl.:
***G09G 3/20*** *(2006.01)*

(86) Internationale Anmeldenummer:
**PCT/EP2009/050615**

(87) Internationale Veröffentlichungsnummer:
**WO 2009/092717 (30.07.2009 Gazette 2009/31)**

(54) **VORRICHTUNG ZUM ANSTEUERN VON PIXELN UND ELEKTRONISCHES ANZEIGEGERÄT**

DEVICE FOR CONTROLLING PIXELS AND ELECTRONIC DISPLAY UNIT

DISPOSITIF D'EXCITATION DE PIXELS ET APPAREIL D'AFFICHAGE ÉLECTRONIQUE ASSOCIÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **21.01.2008 DE 102008000110**
**19.03.2008 EP 08102762**

(43) Veröffentlichungstag der Anmeldung:
**06.10.2010 Patentblatt 2010/40**

(73) Patentinhaber: **SeeReal Technologies S.A.**
**5366 Munsbach (LU)**

(72) Erfinder: **MISSBACH, Robert**
**01731 Kreischa/OT Bärenklause (DE)**

(74) Vertreter: **Helbig, Nicole**
**SeeReal Technologies GmbH**
**Sudhausweg 5**
**01099 Dresden (DE)**

(56) Entgegenhaltungen:
**WO-A-99/48079**  **WO-A-2008/025943**
**US-A- 3 866 209**  **US-A- 4 368 467**
**US-A1- 2006 221 039**

**Beschreibung**

Die Erfindung betrifft eine Vorrichtung zum Ansteuern von Pixeln einer Pixel-Matrix und ein elektronisches Anzeigegerät, das diese Pixelmatrix aufweist.

Das elektronische Anzeigegerät ist insbesondere als ein hochauflösendes Display ausgebildet, das zur Anzeige von Information verwendet wird.

Anwendungsgebiet der Erfindung sind hochauflösende Displays, insbesondere TFT-Displays (TFT: thin film transistors - Dünnschichttransistoren), die für Zwecke eingesetzt werden, bei denen eine schnelle Ansteuerung der Pixel benötig wird, und die räumliche Lichtmodulatoren in einer Pixelmatrix enthalten. Ein weiteres Anwendungsgebiet sind optische Elemente mit einer Pixelmatrix welche die Strahlrichtung, die Strahlform oder die Form einer kohärenten Wellenfront beeinflussen.

Bei den im Stand der Technik bekannten TFT-Displays werden die Pixel normalerweise durch eine Matrix aus Zeilen- und Spaltenleitungen angesteuert, in deren Kreuzungspunkten sich die Pixel-TFT befinden. Diesen Aufbau bezeichnet man als "Aktive Matrix" (AM). Bei ihnen ist immer eine Pixelzeile durch eine Zeilenleitung (gate line) aktiviert und durch die Spaltenleitungen (data line) werden in alle Pixel der aktivierten Zeile gleichzeitig analoge Werte eingeschrieben.

Bei den zunehmend höheren Auflösungen und Bildwiederholraten, wie sie beispielsweise zur Darstellung von Hologrammen in holographischen Displays benötigt werden, stößt die Ansteuerung bei Verwendung herkömmlicher Anzeigedisplays über globale Zeilen- und Spaltenleitungen jedoch an ihre Grenzen. Eine Erhöhung der Frequenz auf den Spaltenleitungen bedeutet, dass die Kapazitäten der Spaltenleitung und der Pixel-TFTs in kürzeren Zeitabständen umgeladen werden müssen.

Dadurch erhöht sich mit steigender Frequenz die Verlustleistung. Ab einer durch den Widerstand und die Kapazität der Leitung vorgegebenen Grenze ist es nicht mehr möglich, die Leitung in einem Takt komplett umzuladen.

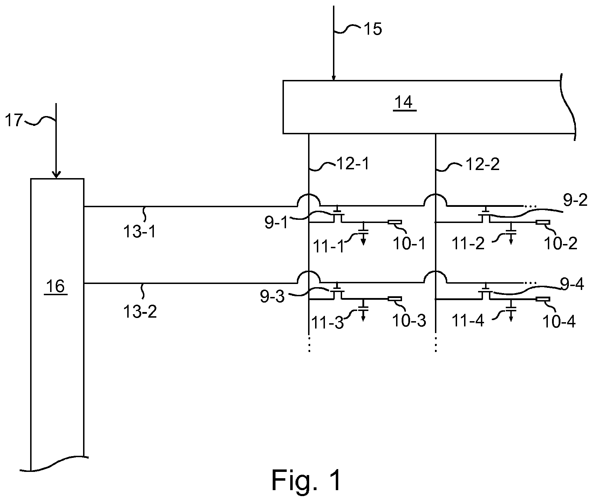

Folgendes Beispiel soll das veranschaulichen. Übliche TFT-Displays, welche heute Auflösungen von bis zu 3840 x 2400 Pixel haben, können nach dem vorgenannten Grundprinzip mit Spalten- und Zeilentreibern angesteuert werden, wie dies schematisch in Fig. 1 dargestellt ist. Fig. 1 zeigt vier Pixelelektroden 10-1, 10-2, 10-3, 10-4 mit entsprechenden Pixelkapazitäten 11-1, 11-2, 11-3, 11-4, die über die Spaltenleitungen 12-1, 12-2 und die Zeilenleitungen 13-1, 13-2 angesteuert werden. Die Spaltenleitungen werden von einer außerhalb der Pixelmatrix liegenden Treiberschaltung 14 angesteuert, das über zumindest einen entsprechenden gemultiplexten Eingang 15 verfügt. Die Zeilenleitungen werden über ein digitales Schieberegister 16 geschaltet, das von einem sogenannten Tokenbit zur Zeilenansteuerung über den Eingang 17 gesteuert wird. Beide Schaltungen sind jeweils am Rand des TFT-Displays angeordnet.

Bei holographischen Displays, die sehr hohe Auflösungen von mehr als 100 Mio. Pixel und hohe Bildwiederholfrequenzen im Bereich über 100Hz benötigen, ist eine solche Ansteueranordnung mit deutlichen Nachteilen verbunden. Erhöht man die Anzahl der Zeilen bzw. die Bildwiederholrate der TFT-Displays, so steigt die Ansteuerfrequenz für die Zeilen- und Spaltenleitungen wie folgt an:

$$\text{Ansteuerfrequenz} = \text{Bildwiederholrate} * \text{Anzahl der Zeilen}$$

Liegt diese Frequenz heute für z.B. 1200 Zeilen und 60 Hz Bildwiederholrate bei 72 kHz, so wären für 4000 Zeilen und 180 Hz Bildwiederholrate 720 kHz als Ansteuerfrequenz notwendig.

Mit zunehmender Größe des Displays nehmen die damit verbundenen Nachteile zu, da entsprechend längere Leitungen unterzubringen und zu benutzen sind. Teilt man beispielsweise ein 40 Zoll Display in Viertel um die Länge der Leitungen zu minimieren, so beträgt die Länge der Zeilenleitungen rund 400mm. Eine weitere Verringerung der Länge ist nicht möglich, solange durchgehende, von außerhalb der Pixelmatrix getriebene Leitungen verwendet werden.

Will man dieses Viertel mit 4000 Zeilen ausführen und mit 180 Hz Bildwiederholrate betreiben, so können diese Werte durch die langen Leitungen nur noch schlecht mit dem in Fig. 1 gezeigten üblichen Aufbau aus Zeilen- und Spaltenleitungen effektiv realisiert werden.

Das Problem im Stand der Technik besteht also darin, dass die üblicherweise in TFT-Displays verwendete Ansteuerung der Pixel sich nicht in der durch Zeilenanzahl und Bildwiderholrate ergebenden Periode der Ansteuerfrequenz realisieren lässt. Durch das erforderliche schnelle Umladen erhöht sich in gleichem Maße die Verlustleistung, was zu erhöhtem Stromverbrauch und erhöhter Wärmeentwicklung führt. Letztere muss zusätzlich abgeführt werden.

Diese Probleme verschärfen sich bei einem hochauflösenden Display, das zum Erzeugen holographischer Rekonstruktionen eingesetzt werden soll und mit einer sehr hohen Anzahl von z.B. 16000 x 8000 Pixel bei 150 Hz Bildwiederholrate arbeiten muss. Aufgrund der extrem hohen Schaltfrequenzen können Displays mit herkömmlicher Ansteuerung für den Einsatz als holographische Displays nicht mehr eingesetzt werden.

Die noch nicht veröffentlichte Patentanmeldung DE 10 2007 040712 der Anmelderin vereinfacht die Ansteuerung der Pixel dadurch, dass das Display in eine Vielzahl von Clustern unterteilt wird und die Cluster jeweils mit Wellenleitern angesteuert werden. Unter einem Cluster ist ein Teildisplay mit einer vorgegeben Anzahl von Pixel, welche durch die Organisation der Ansteuerung zusammengehören, zu verstehen. Eine Vielzahl von Clustern bildet das Display.

Jeder Wellenleiter verbindet einen Ausgang der Datentreiberschaltung mit dem zugeordneten Eingang der Empfängerschaltung eines Clusters. Die Übertragung erfolgt über abgeschlossene Wellenleiter ohne Signalreflexionen, so dass hohe Übertragungsraten erreicht werden können.

Diese Ansteuereinrichtung hat jedoch den Nachteil, dass jeder Cluster eine relativ komplexe Empfängerschaltung aufweisen muss. Dies ist in der Praxis anhand des zur Verfügung stehenden geringen Platzes bei der großen Anzahl von Pixel nur schwer zu realisieren, ohne den funktionsgemäßen Betrieb zu beeinträchtigen.

Aus der US 4,368,467 ist eine Vorrichtung zum Ansteuern der Pixel einer Pixelmatrix bekannt, welche mehrere Cluster aufweist, welche jeweils mit einer Aktiv-Matrix Struktur angesteuert werden.

Der Erfindung liegt daher die Aufgabe zugrunde, bei einem elektronischen Anzeigegerät mit einer in Cluster aufgeteilten Pixelmatrix die Ansteuerung zu verbessern und eine hohe Auflösung bei gleichzeitig hoher Bildwiederholrate zu realisieren.

Erfindungsgemäß wird diese Aufgabe durch eine Vorrichtung nach Anspruch 1, ein elektronisches Anzeigegerät nach Anspruch 13 und ein optisches Element nach Anspruch 14 gelöst.

Vorteilhafte Weiterbildungen der Erfindung sind in den Unteransprüchen definiert. Unter einer Pixelmatrix wird ein in Zeilen und Spalten angeordnetes Feld von das Licht beeinflussenden Zellen verstanden. Die Zellen können dabei eine oder mehrere Eigenschaften von Licht im sichtbaren oder nichtsichtbaren Spektralbereich beeinflussen.

Eine Pixelmatrix im Sinn der Erfindung kann Bestandteil eines Anzeigedisplays, einer Einrichtung zur Wellenfrontformung, eine optischen Abbildungseinrichtung oder einer optischen Ablenkeinheit sein.

Als Lichtmodulator beeinflussen sie entweder die Intensität, die Phase, die Polarisation, die Wellenlänge oder mehrere dieser Eigenschaften gleichzeitig.

Als Phasenarray können sie zur Formung einer Wellenfront verwendet werden. Als variables Prismenarray beeinflussen sie die Strahlrichtung in ein oder zwei Dimensionen. Als variables Linsenarray beeinflussen sie die Form von Lichtstrahlen. Linsenarray und Prismenarray können auch in einer Pixelmatrix vereinigt sein. Eine Pixelmatrix kann in Transmission oder Reflexion arbeiten oder selbst Strahlung erzeugen (z.B. OLED-Matrix). Mehrere Prismenmatrizen können hintereinander geschaltet sei, um mehrere Eigenschaften des Lichtes unabhängig zu beeinflussen. Da die für die Implementierung verwendeten Takte in den Schieberegistern die höchste Frequenz aufweisen und zusätzliche Leitungen benötigen, sieht eine Variante vor, diese Takte an verschiedenen Stellen im Display, zum Beispiel einmal pro Cluster oder an jeder Stelle wo der Takt benötigt wird, mit einem photoempfindlichen Empfänger aus einem optischen Signal zu generieren. Als Empfänger kann zum Beispiel ein lichtempfindlicher TFT dienen. Das Signal kann auf die zur Rückbeleuchtung der Pixelmatrix benutzten Lichtquellen aufmoduliert sein. Eine Alternative währe die Nutzung einer zweiten Lichtquelle mit einer Wellenlänge im nicht sichtbaren Bereich.

Die Erfindung wird anhand der beigefügten Zeichnungen näher erläutert.

Es zeigen:

Fig. 1    einen Ausschnitt eines Schaltbildes zur Ansteuerung von Pixel einer Pixelmatrix gemäß dem Stand der Technik,

Fig. 2    eine vereinfachte schematische Darstellung einer erfindungsgemäßen Ansteuerung eines Clusters,

Fig. 3    eine vereinfachte schematische Darstellung einer Pixelmatrix mit der Ansteuerung von Clustern gemäß einer Ausführung der Erfindung,

Fig. 4    eine vereinfachte schematische Darstellung mit zwei Anordnungsmöglichkeiten des analogen und digitalen Schieberegisters, die in einem Cluster angesteuert werden,

Fig. 5    eine schematische Darstellung der Einbettung der Schieberegister zwischen die Pixel der lokalen Aktiv-Matrix, und

Fig. 6    eine schematische Darstellung hierarchischer Schieberegister für ein Beispiel einer Pixelmatrix mit Elektrobenetzungszellen.

Die Fig. 1 wurde im Stand der Technik bereits beschrieben. Die dort schematisch dargestellten Pixel, welche aus den Pixelelektroden 10-1 bis 10-4, den Speicherkapazitäten 11-1 bis 11-4 und Pixel-TFTs 9-1 bis 9-4 bestehen, sind spalten- und zeilenweise nebeneinander bzw. untereinander mit den nötigen Abständen für die Leitungen zum Ansteuern angeordnet und bilden zusammen mit einer Ansteuerung durch lokale analoge und digitale Schieberegister einen Cluster.

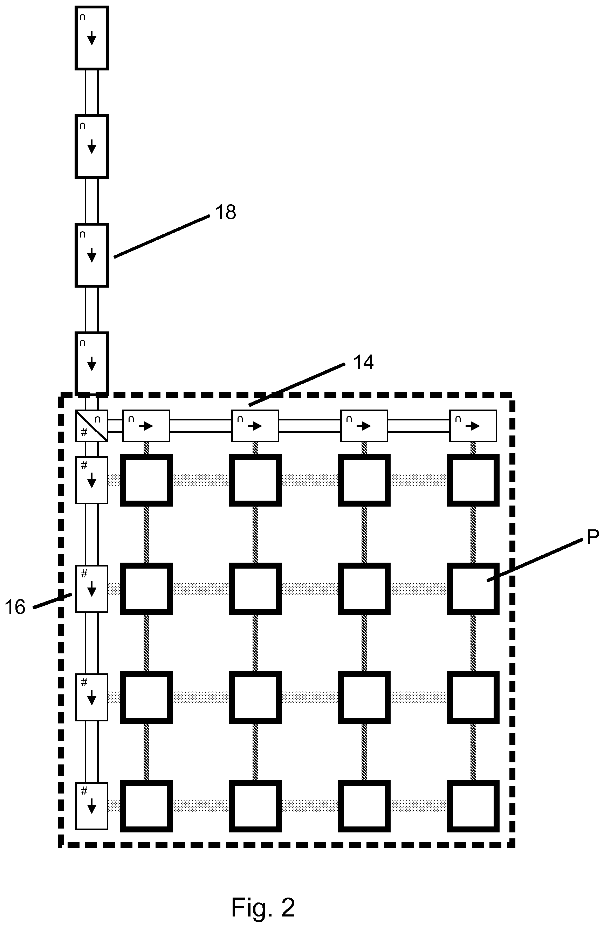

Einem derart ausgebildeten Cluster ist erfindungsgemäß ein weiteres Schieberegister zugeordnet, das als globales Schieberegister 18 bezeichnet wird. Ein Cluster mit diesen drei Schieberegistern ist schematisch in Fig. 2 dargestellt. Zur Vereinfachung werden das lokale analoge 14 und das lokale digitale Schieberegister 16 eines Clusters im Folgenden kurz als analoges und digitales Schieberegister 14 und 16 bezeichnet. In das analoge Schieberegister 14 (Datenschieberegister 14) werden die Spannungswerte über die Spaltenleitungen 12 für die Pixel P eingeschrieben, während das digitale Schieberegister 16 zum Aktivieren der Pixel-Transisitoren einer Pixelzeile über die Zeilenleitungen 13 eingesetzt wird. Ein globales Schieberegister 18 (Datenschieberegister 18) kann auch für mehrere Cluster zum Bereitstellen von Ansteuerdaten genutzt werden.

Die durch Spalten- und Zeilenleitungen verbundenen, als Vierecke dargestellten Pixel P enthalten mindestens einen Transistor zum Ansteuern pro Pixel P. Das Bereitstellen der Daten durch die Spalten- und Zeilenleitungen wird als Aktiv-Matrix-Struktur definiert.

Ein gestrichelter Rahmen um die Pixelmatrix und die Schieberegister markiert einen Cluster.

Eine Vielzahl dieser Cluster sind neben- und untereinander angeordnet und bilden entsprechend einem ersten erfindungsgemäßen Ausführungsbeispiel eine Pixelmatrix, die z.B. in einem Anzeigedisplay realisiert werden kann.

Die globalen Schieberegister 18 der Cluster sind zum Empfang der Ansteuerdaten mit hier nicht dargestellten Datentreiberschaltungen verbunden. Die Funktionsweise eines globalen Schieberegisters 18 wird in nachfolgenden Ausführungsbeispielen näher beschrieben.

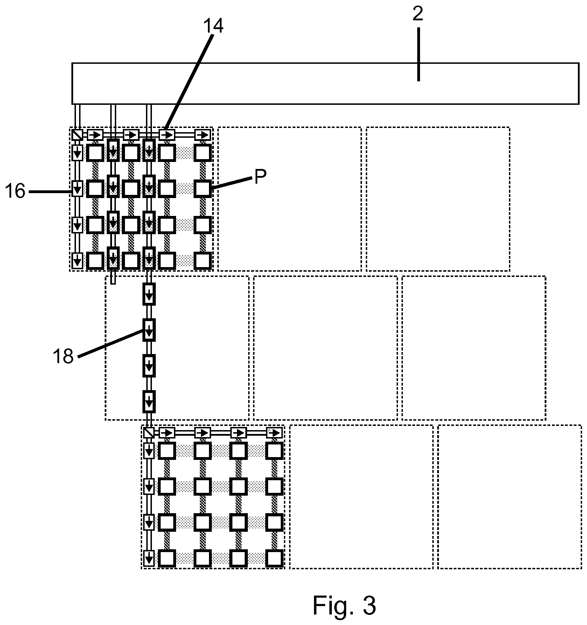

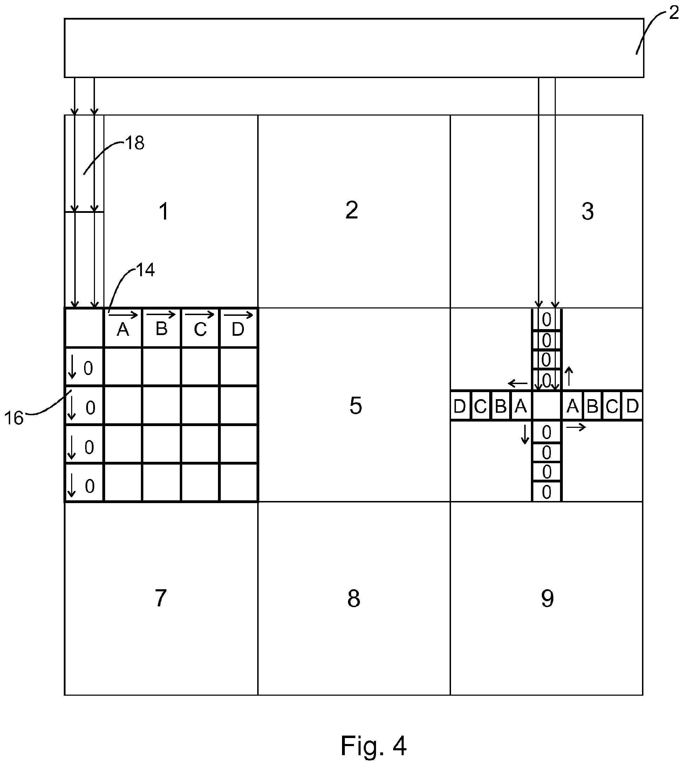

Entsprechend Fig. 3 können die Cluster aber auch von Zeile zu Zeile versetzt zueinander angeordnet werden. Das ergibt den Vorteil, dass die globalen Schieberegister 18 zu den Clustern im Anzeigedisplay nicht alle an einer Stelle von den Clustern zu den Datentreiberschaltungen 2 verlaufen, wie es bei Anzeigedisplays mit z.B. nur Clustern 4 oder Clustern 6 nach Fig. 4 der Fall ist, sondern über eine größere Fläche verteilt sind.

Diese weitere Ausführung einer Anordnung von Clustern und der Weiterverteilung der Daten innerhalb des Clusters kann auch einen hierarchischen Aufbau von Schieberegistern entsprechend einem zweiten Ausführungsbeispiel aufweisen.

Fig. 4 zeigt Möglichkeiten der Anordnung der analogen und digitalen Schieberegister, die in einer Pixelmatrix in z.B. einem Anzeigedisplay vorliegen. Die Pixelmatrix enthält z.B. neun Cluster. In den Clustern 4 und 6 sind zwei Schieberegister-Anordnungen näher ausgeführt.

Das Cluster 4 weist ein analoges und digitales Schieberegister 14 und 16 zum Bereitstellen der Ansteuerdaten wie bekannt am Rand des Clusters auf. Eingezeichnet sind im Cluster 4 weiter die lokalen Zeilen- und Spaltenleitungen, die zu den einzelnen Pixeln P führen.

Ein Ausführungsbeispiel eines Anzeigedisplays würde z.B. neun solcher Cluster 4 enthalten. Das Einspeisen der Daten beider Schieberegister 14, 16 erfolgt im Cluster jeweils dort, wo die Schieberegister zusammentreffen, und wird durch ein globales Schieberegister 18 realisiert.

Die Schieberegister 14, 16 werden mit Ansteuerdaten durch das Schieberegister 18 seriell versorgt. Erfindungsgemäß enthält jedes Cluster 1 bis 9 mindestens ein globales Schieberegister 18, das nur für die Cluster 4 und 6 eingezeichnet ist. Innerhalb des Clusters 4 empfängt der Empfängerteil des analogen Schieberegisters die Ansteuerdaten und leitet sie über die lokalen Zeilen- und Spaltenleitungen an die einzelnen Pixel P des Clusters 4 weiter.

In beiden möglichen Ausführungsbeispielen von Pixelmatrizen liefert mindestens eine außerhalb des Anzeigedisplays angeordnete Datentreiberschaltung 2 die Eingangsdaten für das mindestens einem Cluster zugeordnete, die Ansteuerdaten schiebende globale Schieberegister 18.

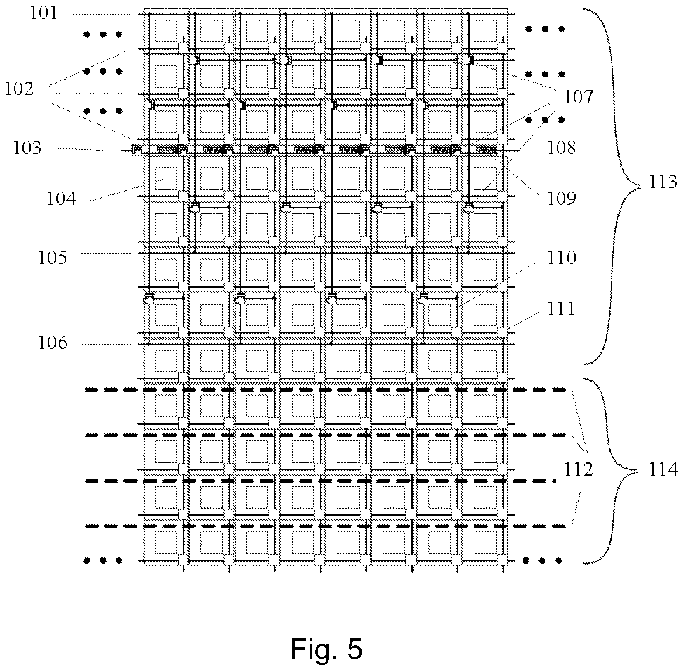

Die Fig. 5 zeigt die Einbettung der Schieberegister zwischen die Pixel der lokalen Aktiv-Matrix (AM). Als Beispiel wurde ein Ausschnitt aus einem Cluster mit einem digitalen Schieberegister mit zwei unterschiedlichen Takten, aufgebaut aus drei Transistoren und einem Kondensator pro Stufe, gewählt. Bei diesem Beispiel wurde nicht wie in den Figuren 1 bis 4 das digitale Schieberegister in vertikaler Richtung, sondern in horizontaler Richtung dargestellt, da beide Varianten von der Funktion identisch, aber um 90° gedreht sind.

Zwar werden für die digitalen Schieberegister etwa 3 bis 5 und für die analogen Schieberegister 7 bis 12 Transistoren (TFTs) pro Segment benötigt, jedoch schon ab einer Clustergröße von zum Beispiel 64x64 Pixel werden zusätzlich zu den Pixel-TFTs nur rund 30% zusätzliche TFTs zur Implementierung der Schieberegister benötigt.

Bei einer für die Realisierung sinnvolleren Größe von 256x256 Pixel pro Cluster beträgt die Erhöhung der Anzahl der TFTs nur noch 10%.

Es ist damit möglich, ein Display zu realisieren, welches im Durchschnitt 1,1 TFTs pro Pixel benötigt und damit nur unwesentlich mehr als bei herkömmlichen Displays mit einem TFT pro Pixel.

Wesentlich ist jedoch, wie in Fig. 5 gezeigt, diese zusätzlichen TFTs über einen breiten Bereich zu verteilen, so dass es nicht zu einer Anhäufung dieser Elemente und damit zu nicht transparenten Bereichen kommt.

Es bezeichnen in Fig. 5 die Bezugszeichen

101 eine Leitung für die Spannungsversorgung,

102 die lokalen Zeilenleitungen der AM im Cluster, gespeist vom analogen Schieberegister, welches nicht in der Zeichnung dargestellt ist,

103 den Eingang einer Stufe des digitalen Schieberegisters, welches vom Ausgang der vorherigen Stufe gespeist wird,

104 eine transparente Fläche des Pixels,

105 eine Leitung des 1. Takts,

106 eine Leitung des 2. Takts,

107 drei TFTs einer Stufe des digitalen Schieberegisters,

108 den Ausgang des digitalen Schieberegisters,

109 einen Kondensator des digitalen Schieberegisters,

110 die Spaltenleitung der AM, die von den Ausgängen des digitalen Schieberegisters angesteuert wird,

111 ein AM TFT

112 Datenleitungen für andere Cluster,

113 einen Bereich des lokalen Clusters, in dem die TFTs und die Leitungsverbindungen des digitalen Schieberegisters eingebettet sind, und

114 einen Bereich des lokalen Clusters, in dem keine TFTs des digitalen Schieberegisters eingebettet sind und der somit für die Implementierung von globalen Verbindungen und Schieberegistern zur Verfügung steht.

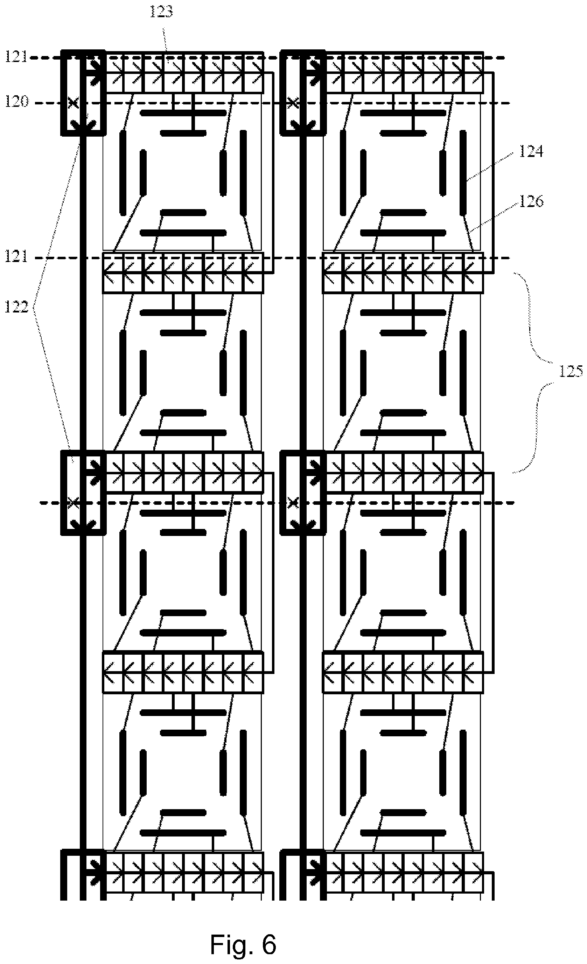

Fig. 6 zeigt die Realisierung mit hierarchischen Schieberegistern für ein Beispiel einer Pixelmatrix mit Elektrobenetzungszellen mit 8 Elektroden pro Pixel. Die Darstellung zeigt einen Ausschnitt aus einem Cluster. Dargestellt sind 8 Pixel in 2 Spalten und 4 Zeilen. Das Schieberegister der 2. Stufe mit 16 anzusteuernden Schiebezellen gibt seine Werte auf zwei Pixel mit je 8 Elektroden aus. Bei einem konkreten Anwendungsfall wird die Anzahl der Schiebezellen und damit der angesteuerten Pixel meist höher als die hier gezeigte Anzahl sein.

Es bezeichnen in Fig. 6 die Bezugszeichen

120 den Takt der 1. Stufe,

121 den Takt der 2. Stufe,

122 ein analoges Schieberegister der 1. Stufe,

123 ein analoges Schieberegister der 2. Stufe,

124 die Elektroden der Elektrobenetzungszellen,

125 einen aus einer Elektrobenetzungszelle mit 8 Elektroden bestehenden Pixel und 126 die Verbindung des Ausgangs des Schieberegisters der 2. Stufe an die Elektrode.

Die analogen Schieberegister können zum Beispiel aus Verstärkern mit der Verstärkung 1 und Transfer-Transistoren oder CCD-Strukturen bestehen.

CCD (Charge Coupled Device) sind eine spezielle Art von analogen Schieberegistern. Sie verwenden eine einfache Struktur mit zwei durchgehenden Halbleiterschichten und darauf angeordneten Elektroden. Eine Struktur ähnlich der von CCD-Kamerasensoren kann zum Aufbau der Schieberegister der hier vorgeschlagenen Realisierung benutzt werden. Im Gegensatz zu Kamerasensoren werden die Ladungen aber in das Substrat hinein anstatt aus dem Substrat heraus transportiert. Hier könnten die Spalten für CCD-Ketten und die Zeilen für Taktleitungen verwendet werden.

Das Hauptproblem bei CCDs, aber auch anderen Implementierungen analoger Schieberegister sind Inhomogenitäten des TFT-Substrats wie z.B. bei Polysilizium. Bei jedem Transfer geht eine kleine Ladungsmenge verloren oder wird zu dem nächsten Wert hinzugefügt. Dieser Effekt wird durch die Ladungstransfereffizienz ("Charge Transfer Efficiency" CTE) beschrieben. Normalerweise muss die CTE sehr hoch (99,9999 %) sein, um viele hintereinandergeschaltete Schiebezellen der Schieberegister und damit an die Ausgänge angeschlossene Pixel, zu realisieren.

Für eine Genauigkeit von 8 Bit ist ein Fehler von etwa 0,5 % akzeptabel. Würde man 32000 Pixel an die Ausgänge der Schiebezellen eines Schieberegister anschießen, so müsste bei 32000 Transfers die CTE 99,999984% sein (100 % - (0,5 % / (32000))).

Die CTE hängt hauptsächlich von der Qualität des verwendeten TFT-Substrates ab. Die Qualität von p-Si-Substrat ist sehr schlecht, verglichen mit einkristallinen Silizium.

Wegen der Probleme mit den Inhomogenitäten von p-Si-Substraten ist eine Ansteuerung mit einfachen, einstufigen analogen Schieberegistern mit etwa 32000 Transfers unmöglich oder sehr schwer zu realisieren.

Werden die Schieberegister in einer hierarchischen Struktur aufgebaut, so dass zum Beispiel vom Schieberegister der 1. Stufe mit 128 Schiebezellen je 128 weitere Schiebregister der 2. Stufe mit je wiederum 256 Schiebezellen abzweigen, so können damit 32768 Pixel nach maximal 384 Transfers angesteuert werden. Dies ist in Fig. 6 beispielhaft für einem Ausschnitt von 2 Schiebezellen des Schieberegisters der 1. Stufe und für je 16 Schiebezellen im Schieberegister der 2. Stufe dargestellt.

Man braucht 128 Takte, um 128 verschiedene Werte in die Schiebezellen des analogen Schieberegisters der 1. Stufe einzuschieben. Jeder Ausgang eines Gliedes der 1. Stufe ist mit einem Eingang eines analogen Schieberegisters der 2. Stufe verbunden. Nun löst ein 128-fach langsamerer Takt der 2. Stufe den Transfer der Werte in den Eingang der Schieberegister der 2. Stufe aus.

Die Ausgänge aller Schiebezellen der Schieberegister der 2. Stufe mit 256 Schiebezellen sind Pixel-Elektroden zugeordnet, so dass nach (128*256) = 32768 Takten die Werte für alle 32768 Pixel vorliegen.

Nun kann ein dritter Takt den Transfer vom Ausgang zur Pixelelektrode auslösen. Dies erfordert eine zusätzliche Taktleitung und einen zusätzlichen Transistor pro Elektrode. Die andere Möglichkeit ist, wie in Fig. 6 dargestellt, die Ausgänge des Schieberegisters direkt mit den Elektroden zu verbinden. In diesem Fall muss die Hintergrundbeleuchtung während des Einschreibens der Daten über die Schieberegister dunkel sein. Dies reduziert die Bildwiederholrate, erlaubt jedoch die Verwendung einer einfacheren Struktur.

Verwendet man drei Ordnungen von Schieberegistern mit je 32 Schiebezellen, so können von den Ausgängen der 3. Stufe ebenfalls 32768 Pixel nach maximal 3*32=96 Schiebevorgängen (Transfers) angesteuert werden.

Die Anzahl der maximal möglichen Transfers kann so durch eine beliebige Anzahl von Ordnungen stark reduziert werden, wodurch auch Schieberegister mit einer sehr schlechten CTE verwendet werden können.

Die maximale Anzahl der Pixel, welche von einer solchen hierarchischen Struktur angesteuert werden können, ist durch die Schaltfrequenz (Zeit für einen Transfer) des Schieberegisters der niedrigsten Ordnung, welche die Daten zum Cluster transportiert, begrenzt. Da für dieses globale Schieberegister eine beliebige Anzahl von Stufen möglich ist, ist die Schaltfrequenz nicht von der Länge der Leitungen und damit der Größe des Displays, sondern nur von den Eigenschaften des TFT-Substrates abhängig. So kann man bei einer angenommenen Schaltfrequenz von 25 MHz ein Schieberegister mit 32768 Pixel mit bis zu 763 Hz Bildwiederholrate ansteuern.

Dies ist ein wesentlicher Vorteil dieser Implementierung im Vergleich zu herkömmlichen AM-Strukturen, da so mit den in Zukunft zu erwartenden besseren Halbleitermaterialien und kleineren Transistoren die Anzahl der Pixel in Kombination mit der Bildwiederholrate, weitgehend unabhängig von der Größe des Displays, nahezu beliebig gesteigert werden kann. Bei herkömmlichen Displays mit einer Ansteuerung einer AM ist dies durch die Kapazität der durchgehenden Zeilen- und Spaltenleitungen nicht möglich.

Bevorzugt weist jeder Cluster eine beliebige Anzahl vom globalen Schieberegister abzweigende hierarchisch angeordnete lokale analoge Schieberegister zum taktweisen Schieben der Ansteuerdaten auf. Die Ansteuerdaten werden vorzugsweise nach einer Anzahl von N Takten vom globalen in die lokalen analogen Schieberegister übernommen, wobei der Transport der Daten zum adressierten Pixel mit einem jeweils N-fach niedrigeren Takt über die Aktiv-Matrix-Struktur erfolgt, und wobei N die Anzahl der Schiebezellen im Schieberegister ist.

Neben der beschriebenen Implementierung der Schieberegister und weiterer Teile des TFT-Anzeigedisplays in p-Si-Technik werden diese gemäß weiterer Ausführungsformen in anderen Halbleitertechnologien, wie beispielsweise organische TFT, poly-SiGe, ZnO, einkristallines Silizium oder GaAs, implementiert. Polysilizium (p-Si) steht hier für die verschiedenen möglichen Untertypen, wie ULTPS, LPSOI, LTPS, HPS, CGS oder andere. Die Besonderheiten der jeweiligen Halbleitertechnologie und deren Berücksichtigung in Anbetracht der Anforderungen der Erfindung sind für den Fachmann geläufig und bedürfen keiner weiteren Ausführungen.


**Patentansprüche**

1. Vorrichtung zum Ansteuern der Pixel einer Pixelmatrix mit

   - einer in eine Vielzahl von Clustern unterteilten Pixelmatrix, bei der jeder Cluster mindestens ein lokales digitales Schieberegister (16) und mindestens ein lokales Datenschieberegister (14) aufweist und die Weiterverteilung der Ansteuerdaten innerhalb des Clusters durch eine Aktiv-Matrix-Struktur erfolgt,
   - mindestens einer Datentreiberschaltung (2) mit wenigstens einem Ausgang zur Ausgabe von Ansteuerdaten, und
   - einem oder mehreren Clustern zugeordneten globalen Datenschieberegistern (18) mit einem Eingang zum Empfang der Ansteuerdaten von einem Ausgang der Datentreiberschaltung (2), wobei die globalen Datenschieberegister (18) dazu eingerichtet sind, die empfangenen Ansteuerdaten zu einem Empfängerteil des jeweiligen lokalen Datenschieberegisters (14) eines Clusters weiter zu leiten und dort einzuspeisen, und wobei jeder Pixel im Cluster durch eine lokale Zeilen- und Spaltenleitung (13, 12) ansteuerbar ist und das zugeordnete lokale Datenschieberegister (14) und das lokale digitale Schieberegister (16) anhand der empfangenen Ansteuerdaten zum Ansteuern der jeweiligen lokalen Zeilen- und Spaltenleitung (13, 12) aller Pixel (P) innerhalb des zugeordneten Clusters eingerichtet ist, **dadurch gekennzeichnet, dass** die globalen und lokalen Datenschieberegister (14, 18) analoge Schieberegister sind und dass die Schieberegister (14, 16, 18) zwischen den Pixeln (P) der Aktiv-Matrix (113, 114) eingebettet sind.

2. Vorrichtung nach Anspruch 1, wobei für die globalen Datenschieberegister (18) benötigte zusätzliche Transistoren zwischen den Pixeln (P) der lokalen Aktiv-Matrix-Strukturen der Cluster über einen breiten Bereich derart verteilt sind, dass es nicht zu einer Anhäufung der zusätzlichen Transistoren und zu nicht transparenten Bereichen kommt.

3. Vorrichtung nach Anspruch 1, bei der die analogen Schieberegister aus einem hierarchischen Aufbau aus mehreren Stufen bestehen oder bei der jeder Cluster eine beliebige Anzahl vom globalen Datenschieberegister (18) abzweigende hierarchisch angeordnete lokale Datenschieberegister (14) zum taktweisen Schieben der Ansteuerdaten aufweist.

4. Vorrichtung nach Anspruch 3, bei der die Ansteuerdaten nach einer Anzahl von N Takten vom globalen in die lokalen Datenschieberegister (14) übernommen werden, wobei der Transport der Daten zum adressierten Pixel (P) mit einem jeweils N-fach niedrigeren Takt über die Aktiv-Matrix-Struktur erfolgt, und wobei N die Anzahl der Schiebezellen im Schieberegister ist.

5. Vorrichtung nach einem der vorhergehenden Ansprüche, bei der die Bereitstellung synchroner Taktsignale durch Wandlung von optischen Impulsen erfolgt, für deren Umwandlung in elektrische Signale lokal mehrere über die Pixelmatrix verteilte photoempfindliche Empfänger angeordnet sind.

6. Vorrichtung nach Anspruch 5, bei der die optischen Impulse auf die zur Rückbeleuchtung benutzten Lichtquellen der Pixelmatrix aufmoduliert sind.

7. Vorrichtung nach einem der vorhergehenden Ansprüche, bei der die Cluster in eine beliebige Anzahl von Subclustern unterteilt sind.

8. Vorrichtung nach einem der vorhergehenden Ansprüche, bei der die Pixelmatrix in quadratische, rechteckige oder wabenförmige Cluster unterteilt ist.

9. Vorrichtung nach einem der vorhergehenden Ansprüche, bei der die Pixelmatrix zum Ansteuern der Pixel TFTs benutzt, oder bei der die Pixelmatrix zum Ansteuern der Pixel eine CCD-Struktur benutzt.

10. Vorrichtung nach einem der vorhergehenden Ansprüche, bei der die Pixelmatrix zum Ansteuern der Pixel eine Matrix von Elektrobenetzungszellen ist.

11. Vorrichtung nach einem der vorhergehenden Ansprüche, bei der die Pixelmatrix ein Anzeigedisplay zur Modulation von Intensität und/oder Phase von Licht bildet.

12. Vorrichtung nach Anspruch 11, bei der die Pixelmatrix ein OLED-Display, ein MO-Display oder ein LC-Display ist.

13. Elektronisches Anzeigegerät, welches eine Vorrichtung zum Ansteuern der Pixel einer Pixelmatrix nach wenigstens einem der Ansprüche 1 bis 11 umfasst, wobei die Pixelmatrix eine Matrix von Elektrobenetzungszellen aufweist und wobei das elektronische Anzeigegerät ein Anzeigedisplay aufweist.

14. Optisches Element, welches eine Vorrichtung zum Ansteuern der Pixel einer Pixelmatrix nach einem der Ansprüche 1 bis 11 aufweist, bei dem die Pixelmatrix ein Array strahlablenkender und/oder strahlformender Pixel bildet.

**Claims**

1. Apparatus for controlling the pixels in a pixel matrix, having

   - a pixel matrix which is subdivided into a multiplicity of clusters and in which each cluster has at least one local digital shift register (16) and at least one local data shift register (14) and the control data are distributed further within the cluster by an active matrix structure,
   - at least one data driver circuit (2) having at least one output for outputting control data, and
   - one or more global data shift registers (18) which are assigned to clusters and have an input for receiving the control data from an output of the data driver circuit (2), wherein the global data shift registers (18) are adapted to forward the received control data to a receiver part of the respective local data shift register (14) of a cluster and to feed in said control data there, and wherein each pixel in the cluster can be controlled by means of a local row line and column line (13, 12), and the assigned local data shift register (14) and the local digital shift register (16) are adapted to control the respective local row and column lines (13, 12) of all pixels (P) within the assigned cluster on the basis of the received control data, **characterized in that** the global and local data shift registers (14, 18) are analogue shift registers, and **in that** the shift registers (14, 16, 18) are embedded between the pixels (P) in the active matrix (113, 114).

2. Apparatus according to Claim 1, wherein additional transistors required for the global data shift registers (18) are distributed between the pixels (P) in the local active matrix structures of the clusters over a wide area in such a manner that an accumulation of the additional transistors and non-transparent areas do not result.

3. Apparatus according to Claim 1, in which the analogue shift registers consist of a hierarchical structure of a plurality of levels, or in which each cluster has any desired number of hierarchically arranged local data shift registers (14) which branch off from the global data shift register (18) in order to shift the control data in a clocked manner.

4. Apparatus according to Claim 3, in which the control data are adopted from the global data shift register into the local data shift registers (14) after a number of N clock pulses, wherein the data are transported to the addressed pixel (P) via the active matrix structure at a clock rate which is N times lower, respectively, and wherein N is the number of shift cells in the shift register.

5. Apparatus according to one of the preceding claims, in which synchronous clock signals are provided by converting optical pulses, for the conversion of which into electrical signals a plurality of photosensitive receivers distributed over the pixel matrix are locally arranged.

6. Apparatus according to Claim 5, in which the optical pulses are modulated onto the light sources used for the backlighting the pixel matrix.

7. Apparatus according to one of the preceding claims, in which the clusters are subdivided into any desired number of sub-clusters.

8. Apparatus according to one of the preceding claims, in which the pixel matrix is subdivided into square, rectangular or honeycomb-shaped clusters.

9. Apparatus according to one of the preceding claims, in which the pixel matrix uses TFTs to control the pixels, or in which the pixel matrix uses a CCD structure to control the pixels.

10. Apparatus according to one of the preceding claims, in which the pixel matrix for controlling the pixels is a matrix of electrowetting cells.

11. Apparatus according to one of the preceding claims, in which the pixel matrix forms a display for modulating the intensity and/or phase of light.

12. Apparatus according to Claim 11, in which the pixel matrix is an OLED display, an MO display or an LC display.

13. Electronic display device which comprises an apparatus for controlling the pixels in a pixel matrix according to at least one of Claims 1 to 11, wherein the pixel matrix comprises a matrix of electrowetting cells, and wherein the electronic display device comprises a display.

14. Optical element which comprises an apparatus for controlling the pixels in a pixel matrix according to one of Claims 1 to 11, in which the pixel matrix forms an array of beam-deflecting and/or beam-shaping pixels.

**Revendications**

1. Dispositif de commande des pixels d'une matrice de pixels doté

- d'une matrice de pixel divisée en une pluralité de grappes, où chaque grappe comporte au moins un registre local numérique à décalage (16) et au moins un registre local de données à décalage (14) et la distribution ultérieure des données de commande s'effectue à l'intérieur de la grappe par le biais d'une structure de matrice active,
- d'au moins un circuit de commande de données (2) doté d'au moins une sortie destinée à l'émission de données de commandes, et
- d'un ou plusieurs registres globaux de données à décalage (18) ordonnés à des grappes et dotés d'une entrée destinée à la réception des données de commandes venant d'une sortie du circuit de commande de données (2), dans lequel les registres globaux de données à décalage (18) sont disposés de façon à retransmettre les données de commande reçues vers une partie réceptrice du registre local de données à décalage (14) correspondant d'une grappe et à les y injecter, et dans lequel chaque pixel dans la grappe est commandable au moyen d'un conducteur local de ligne et de colonne (13, 12) et le registre local de données à décalage (14) qui y est ordonné et le registre local numérique à décalage (16) sont disposés pour piloter les conducteurs locaux de ligne et de colonne (13, 12) respectifs de tous les pixels (P) au sein de la grappe ordonnée au moyen des données de commande reçues, **caractérisé en ce que** les registres locaux et globaux de données à décalage (14, 18) sont des registres à décalage analogiques et **en ce que** les registres à décalage (14, 16, 18) sont incrustés entre les pixels (P) de la matrice active (113, 114).

2.  Dispositif selon la revendication 1, dans lequel pour les registres globaux de données à décalage (18) des transistors supplémentaires sont distribués entre les pixels (P) des structures de matrice active locales sur une zone large de telle sorte que cela ne donne pas lieu à une accumulation de transistors supplémentaires et à des zones non transparentes.

3.  Dispositif selon la revendication 1, les registres à décalage analogiques étant composés d'une construction hiérarchique à plusieurs étages ou chaque grappe comportant un nombre aléatoire de registres locaux de données à décalage (14), dérivés de registres globaux de données à décalage (18), agencés hiérarchiquement pour l'envoi périodique des données de commande.

4.  Dispositif selon la revendication 3, où les données de commande sont transmises des registres globaux de données à décalage aux registres locaux (14) après un nombre de N périodes, dans lequel le transport des données au pixel de destination (P) avec une période respective N fois plus faible s'effectue par la structure de matrice active, et dans lequel N est le nombre de cellules de décalage dans le registre à décalage.

5.  Dispositif selon l'une des revendications précédentes, où la génération de signaux d'horloge synchrones s'effectue par conversion d'impulsions optiques, pour la transformation en signaux électriques desquelles plusieurs récepteurs photosensibles distribués sur la matrice de pixels sont agencés localement.

6.  Dispositif selon la revendication 5, où les impulsions optiques sont modulées sur les sources de lumière de la matrice de pixels utilisées pour le rétroéclairage.

7.  Dispositif selon l'une des revendications précédentes, où les grappes sont divisées en un nombre aléatoire de sous-grappes.

8.  Dispositif selon l'une des revendications précédentes, où la matrice de pixels est divisée en grappes carrées, rectangulaires ou alvéolées.

9.  Dispositif selon l'une des revendications précédentes, où la matrice de pixels utilise des TCM pour la commande des pixels ou une structure CCD pour la commande des pixels.

10. Dispositif selon l'une des revendications précédentes, où la matrice de pixels utilise une matrice de cellules d'électromouillage pour la commande des pixels.

11. Dispositif selon l'une des revendications précédentes, où la matrice de pixels forme un écran d'affichage pour la modulation de l'intensité et/ou de la phase de la lumière.

12. Dispositif selon la revendication 11, où la matrice de pixels est un écran OLED, un écran MO ou un écran à cristaux liquides.

13. Appareil d'affichage électronique, lequel comprend un dispositif de commande des pixels d'une matrice de pixels selon au moins une des revendications 1 à 11, dans lequel la matrice de pixels comporte une matrice de cellules d'électromouillage et dans lequel l'appareil d'affichage électronique comporte un écran d'affichage.

14. Élément optique, lequel comprend un dispositif de commande des pixels d'une matrice de pixels selon l'une des revendications 1 à 11, où la matrice de pixels constitue un réseau de pixels déviant et/ou formant les faisceaux lumineux.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007040712

- US 4368467 A